Europäisches Patentamt

European Patent Office

Office européen des brevets

(19)

(11) Veröffentlichungsnummer: **0 204 924**
**B1**

(12) **EUROPÄISCHE PATENTSCHRIFT**

(45) Veröffentlichungstag der Patentschrifft:
07.02.90

(21) Anmeldenummer: **86105304.9**

(22) Anmeldetag: **17.04.86**

(51) Int. Cl. ⁵: **C 08 L 51/00, C 08 J 5/18**

(54) Formmassen mit verbesserten Verarbeitungseigenschaften und daraus hergestellte alterungsbeständige Kunststoffolien.

(30) Priorität: **15.05.85 DE 3517583**

(43) Veröffentlichungstag der Anmeldung:
**17.12.86 Patentblatt 86/51**

(45) Bekanntmachung des Hinweises auf die Patenterteilung:
**07.02.90 Patentblatt 90/06**

㊅ Bennante Vertragsstaaten:
**AT BE CH DE FR GB IT LI LU NL SE**

(56) Entgegenhaltungen:
**EP-A-0 143 321**

**PATENTS ABSTRACTS OF JAPAN, Band 6, Nr. 180 (C-125) 1058 , 14. September 1982; & JP - A - 57 98542**

(73) Patentinhaber: **ALKOR GMBH KUNSTSTOFFE**
**Morgensternstrasse 9 Postfach 71 01 09**
**D-8000 München 71 (DE)**

(72) Erfinder: **Fink, Roland**
**Anwänden 3**
**D-8026 Ebenhausen (DE)**
Erfinder: **Huber-Hesselberger, Josef**
**Behringstrasse 113**
**D-8000 München 50 (DE)**
Erfinder: **Mayr, Maximilian**
**Frank-Caro-Strasse 63**
**D-8268 Garching (DE)**

(74) Vertreter: **Seiler, Siegfried**
**c/o DEUTSCHE SOLVAY-WERKE GmbH**
**Langhansstrasse 6 Postfach 11 02 70**
**D-5650 Solingen 11 (DE)**

LIBERGRAF, STOCKHOLM 1990

EP 0 204 924 B1

## Beschreibung

Die vorliegende Erfindung betrifft Formmassen mit verbesserten Verarbeitungseigenschaften und daraus hergestellte alterungsbeständige Kunststoffolien, insbesondere flexible Tiefziehfolien mit verbessertem Alterungsverhalten, bestehend aus einer Legierung oder Kunststoffmischung auf der Basis von mit Acrylat gepfropftem Polyvinylchlorid mit einem Anteil des Acrylats an dem Pfropfpolymerisat von 30 bis 60 Gew.-%, vorzugsweise 35 bis 50 Gew.-% (bezogen auf 100 Gew.-%, Teile Polyvinylchlorid oder Vinylchloridmischpolymerisat), und einem anderen Polymeren oder Polymergemisch sowie ggf. mit einem zusätzlichen Gehalt an Füllstoffen, Verarbeitungshilfsmitteln oder anderen an sich bekannten Zusatzmitteln.

Gemäß der Erfindung bestehen die Formmassen und die daraus hergestellten Kunststoffolien aus bestimmten Gewichtsmengen des mit Acrylat gepfropften Polyvinylchlorids sowie bestimmten Gewichtsmengen eines anderen Polymeren oder Polymergemisches, das eine Glasumwandlungstemperatur von größer als 30°C, vorzugsweise größer als 40°C, besitzt und mit dem Polyvinylchlorid-Pfropfpolymerisat auf der Basis von Vinylchlorid verträglich ist.

Es sind bereits die unterschiedlichsten Folien und Verbundfolien, z. B. auf der Basis von Acrylnitril-Butadien-Styrol-Copolymerisaten mit weichmacherhaltigem Polyvinylchlorid, laminiert mit Hart- und Weich-PVC, bekannt. Diese Folien haben offensichtlich aufgrund ihres Weichmachergehaltes den Nachteil, daß allmählich eine Verringerung der Elastizität, der Kälteflexibilität und bei längerer Wärme- und Lichteinwirkung sogar Rissbildung der Oberfläche eintritt.

Laminate mit starren bzw. harten Polymerisaten, beispielsweise Hartpolyvinylchlorid, besitzen den Nachteil der hohen Steifigkeit und einer geringen Kälteflexibilität.

Die Beständigkeit gegen Wärme und Lichtalterung ist jedoch bei Folien, insbesondere Tiefziehfolien, für Automobilverkleidungsteile eine entscheidende Gebrauchseigenschaft, so daß die flexiblen und gleichzeitig gut thermoformbaren Verkleidungsfolien, insbesondere für Armaturenbretter, auf der Basis von Acrylnitril-Butadien-Styrol, Polyvinylchlorid und weichmachenden Komponenten, infolge der Oxidationsempfindlichkeit der in dieser Mischung vorhandenen Dien-Struktur in Anwesenheit von Licht- und/oder Wärmeenergie verhältnismäßig oxidationsempfindlich sind und auch diesen Anforderungen nicht in vollem Umfang entsprechen.

Formmassen und Folien, bestehend aus 90 - 45 Gew.-%, vorzugsweise 85 - 50 Gew.-%, eines des mit Acrylat gepfropften Polyvinylchlorids mit einem Anteil des Acrylats an dem Pfrofpfpolymerisat oder Pfropfpolymerisat von 30 - 60 Gew.-%, vorzugsweise 35 - 50 Gew.-%, (bezogen auf 100 Gew.-Teile PVC oder Vinylchloridmischpolymerisat) und 10 - 55 Gew.-%, vorzugsweise 15 - 50 Gew.-%, eines anderen Polymeren oder Polymergemisches, das eine Glasumwandlungstemperatur von größer als 70°C, vorzugsweise größer als 80°C, besitzt und mit dem Polyvinylchlorid-Pfropfpolymerisat verträglich ist, sind bereits aus der DE-OS-3 342 435.7 bekannt. Diese Formmassen und Folien sind jedoch in Verbindung mit weichen Schäumen nicht sehr zweckmäßig und ergeben beispielsweise keine gute Haptik.

Ziel und Aufgabe der vorliegenden Erfindung war es daher, Folien und Formmassen zur Herstellung von Folien mit einwandfreier Oberfläche auf der Basis oder unter Mitverwendung von Polyvinylchlorid zu erhalten, die verbesserte Verformungs- und Relaxationseigenschaften aufweisen. Die Folien sollten dabei vorzugsweise als Tiefziehfolien mit verbessertem Alterungsverhalten gut geeignet und sowohl als Mono- als auch Verbundfolie verwendbar sein.

Die flexiblen Folien sollten gegenüber der DE-OS-3 342 435.7, insbesondere in Verbindung mit weicheren Schäumen für die Verkleidung von Armaturenbrettern, Seitenteilen und dgl. geeigneter und/oder weicher sein. Es sollte eine wesentlich verbesserte Haptik erzielt werden.

Erfindungsgemäß wurde festgestellt, daß diesen Zielen und Aufgaben Formmassen und aus den Formmassen hergestellte Kunststoffolien entsprechen, bestehend aus einer Legierung oder Kunststoffmischung auf der Basis von mit Acrylat gepfropftem Polyvinylchlorid mit einem Anteil des Acrylats an dem Pfropfpolymerisat oder Pfropfmischpolymerisat von 30 - 60 Gew.-%, vorzugsweise 35 - 50 Gew.-%, (bezogen auf 100 Gew.-Teile PVC oder Vinylchloridmischpolymerisat) und einem anderen Polymeren oder Polymergemisch sowie ggf. mit einem zusätzlichen Gehalt an Füllstoffen, Verarbeitungshilfsmitteln oder anderen an sich bekannten Zusatzmitteln. Gemäß der Erfindung besteht die Formmasse und die daraus hergestellten Kunststoffolien aus 44,9 - 28 Gew.-%, vorzugsweise 44,8 - 30 Gew.-%, des mit Acrylat gepfropften Polyvinylchlorids und 55,1 - 72 Gew.-%, vorzugsweise 55,2 - 70 Gew.-%, eines anderen Polymeren oder Polymergemisches, das eine Glasumwandlungstemperatur von größer als 30°C, vorzugsweise größer als 40°C, besitzt und mit dem Polyvinylchlorid-Pfropfpolymerisat verträglich ist und das ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate ist oder diese enthält.

Gemäß der Erfindung enthält das Polymergemisch vorzugsweise zusätzlich mindestens ein Copolymerisat oder Terpolymerisat mit polaren Gruppen, vorzugsweise Ethylen-Copolymerisat oder Ethylen-Terpolymerisat mit polaren Gruppen, mit einer Glasumwandlungstemperatur von kleiner als 60°C, vorzugsweise kleiner als 50°C.

Das Polymergemisch, das eine Glasumwandlungstemperatur von größer als 30°C, vorzugsweise größer als 40°C, besitzt, besteht nach einer vorzugsweisen Ausführungsform der Erfindung aus mindestens einem Styrol-Acrylnitril-Copolymerisat (SAN), einem Methylstyrol-Acrylnitril-Copolymerisat, einem Styrol-Maleinsäureanhydrid-Copolymerisat, einem Polymethylmethacrylat (PMMA) und/oder einem Copolymerisat aus einem oder mehreren Acrylestern mit Acrylnitril oder einer Mischung von zwei oder mehreren dieser Copolymerisate und mindestens einem

EP 0 204 924 B1

Olefin-Copolymerisat oder -Terpolymerisat mit polaren Gruppen, vorzugsweise einem Ethylen-Copolymerisat oder -Terpolymerisat mit polaren Gruppen, mit einer Glasumwandlungstemperatur von kleiner als 60°C, vorzugsweise kleiner als 50°C.

Die Gewichtsanteile, nämlich 55,1 - 72 Gew.-%, vorzugsweise 55,2 - 70 Gew.-%, des Polymergemisches, das eine Glasumwandlungstemperatur von größer als 30°C, vorzugsweise größer als 40°C, besitzt, bestehen somit aus einem oder mehrerer Olefincopolymerisat(en) mit polaren Gruppen und mit einer Glasumwandlungstemperatur kleiner als 60°C, vorzugsweise kleiner als 50°C, vorzugsweise aus einem oder mehreren Ethylencopolymerisaten mit polaren Gruppen, und einem Styrol-Acrylnitril-Copolymerisat (SAN), einem Methylstyrol-Acrylnitril-Copolymerisat, einem Styrol-Maleinsäureanhydrid-Copolymerisat, einem Polymethylmethacrylat (PMMA) und/oder einem Copolymerisat aus einem oder mehreren Acrylestern mit Acrylnitril oder einer Mischung von zwei oder mehreren dieser Copolymerisate, wobei das Gewichtsverhältnis des polare Gruppen enthaltenden Olefincopolymerisates zu dem wärmebeständigen Polymerisat oder Copolymerisat(en) 4 : 1 bis 1 : 4, vorzugsweise 3 : 1 bis 1 : 3, beträgt.

Die Erfindung betrifft weiterhin eine Folie oder Folienbahn, insbesondere flexible Tiefziehfolie oder Folienbahn mit verbessertem Alterungsverhalten, die aus einer Legierung oder Mischung auf der Basis von mit Acrylat gepfropftem Polyvinylchlorid mit einem Anteil des Acrylats an dem Pfropfpolymerisat oder Pfropfmischpolymerisat von 30 - 60 Gew.-%, vorzugsweise 35 - 50 Gew.-%, (bezogen auf 100 Gew.-Teile PVC oder Vinylchloridmischpolymerisat) und einem anderen Polymeren oder Polymergemisch sowie ggf. mit einem zusätzlichen Gehalt an Füllstoffen, Verarbeitungshilfsmitteln oder anderen an sich bekannten Zusatzmitteln, besteht.

Gemäß der Erfindung besteht die Folie aus 44,9 - 28 Gew.-%, vorzugsweise 44,8 - 30 Gew.-%, des mit Acrylat gepfropften Polyvinylchlorids und 55,1 - 72 Gew.-%, vorzugsweise 55,2 - 70 Gew.-%, eines anderen Polymeren oder Polymergemisches, das eine Glasumwandlungstemperatur von größer als 30°C, vorzugsweise größer als 40°C, besitzt und mit dem Polyvinylchlorid-Pfropfpolymerisat verträglich ist und das ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate ist oder diese(s) enthält.

Das in der Folie oder Folienbahn enthaltende Polymergemisch bzw. die Legierung enthält zusätzlich mindestens ein Copolymerisat oder Terpolymerisat mit polaren Gruppen mit einer Glasumwandlungstemperatur von kleiner als 60°C, vorzugsweise kleiner als 50°C.

In der Folie besteht das Polymergemisch, das eine Glasumwandlungstemperatur von größer als 30°C, vorzugsweise größer als 40°C, aus mindestens einem Styrol-Acrylnitril-Copolymerisat (SAN), einem Methylstyrol-Acrylnitril-Copolymerisat, einem Styrol-Maleinsäureanhydrid-Copolymerisat, einem Polymethylmethacrylat (PMMA) und/oder einem Copolymerisat aus einem oder mehreren Acrylestern mit Acrylnitril oder einer Mischung von zwei oder mehreren dieser Copolymerisate und mindestens einem Olefin-Copolymerisat oder -Terpolymerisat mit polaren Gruppen, vorzugsweise einem Ethylen-Copolymerisat oder -Terpolymerisat mit polaren Gruppen, mit einer Glasumwandlungstemperatur von kleiner als 60°C, vorzugsweise kleiner als 50°C.

Nach einer bevorzugten Ausführungsform bestehen in der Folie oder Folienbahn die 55,1 - 72 Gew.-%, vorzugsweise 55,2 - 70 Gew.-%, des Polymergemisches, das eine Glasumwandlungstemperatur von größer als 30°C, vorzugsweise größer als 40°C, besitzt, aus (bezogen auf die Kunststoffmischung) einem oder mehrerer Olefincopolymerisat(en) mit polaren Gruppen und mit einer Glasumwandlungstemperatur kleiner als 60°C, vorzugsweise kleiner als 50°C, vorzugsweise aus einem oder mehreren Ethylencopolymerisaten mit polaren Gruppen, und einem Styrol-Acrylnitril-Copolymerisat (SAN), einem Methylstyrol-Acrylnitril-Copolymerisat, einem Styrol-Maleinsäureanhydrid-Copolymerisat, einem Polymethylmethacrylat (PMMA) und/oder einem Copolymerisat aus einem oder mehreren Acrylestern mit Acrylnitril oder einer Mischung von zwei oder mehreren dieser Copolymerisate, wobei das Gewichtsverhältnis des polare Gruppen enthaltenden Olefincopolymerisates zu dem wärmebeständigen Polymerisat(en) und/oder Copolymerisat(en) 4 : 1 bis 1 : 4, vorzugsweise 3 : 1 bis 1 : 3, beträgt.

Nach einer Ausführungsform der Erfindung ist bei der Formmasse und/oder der Folie das mit Acrylat gepfropfte Polyvinylchlorid bis zu 85 Gew.-%, vorzugsweise bis zu 45 Gew.-% (bezogen auf 100 Gew.-Teile PVC oder acrylatgepfropftes PVC), durch eine Legierung oder Mischung aus Vinylchloridhomo- und/oder -copolymerisat und Polyacrylat, die ebenfalls einen Acrylatanteil von 30 - 60 Gew.-%, vorzugsweise 35 - 50 Gew.-%, (bezogen auf 100 Gew.-Teile PVC oder Vinylchloridmischpolymerisat) aufweist, ersetzt. Dabei wird das mit Acrylat gepfropfte Polyvinylchlorid durch die gleiche Gewichtsmenge der vorgenannten Legierung oder Mischung ersetzt.

Beispiel für die erfindungsgemäße Folie oder Formmasse:

| | |
|---|---|
| Acrylat-gepfropftes Polyvinylchlorid | 42,9 Gew.% |
| -Methylstyrol-Acrylnitril-Copolymerisat | 28,5 Gew.-% |
| Ethylen-Kohlenmonoxyd-Vinylacetat-Terpolymerisat | 28,6 Gew.-% |

wurden zu einer 0,4 mm dicken Folie kalandriert. An dieser Folie wurden folgende Werte nach den entsprechenden DIN-Prüfnormen gemessen:

3

| – Shore D | | | |
|---|---|---|---|
| DIN 53 505 nach 10 sec | | | 35 |
| – Vicaterweichungspunkt | | | |
| DIN 53 460, Verfahren A | | °C | 50 |
| – Zugfestigkeit | längs | N/m$^2$ | 14,4 |
| DIN 52 910 | quer | | 13,6 |
| – Reißdehnung | längs | % | 237 |
| DIN 52 910 | quer | | 222 |

**Patentansprüche**

1. Formmassen zur Herstellung von alterungsbeständigen Folien mit verbesserten Verarbeitungseigenschaften, bestehend aus einer Legierung oder Kunststoffmischung auf der Basis von

   1.     mit Acrylat gepfropftem Polyvinylchlorid mit
   1.1   einem Anteil des Acrylats an dem Pfropfpolymerisat oder Pfropfmischpolymerisat von
         30 - 60 Gew.-%, vorzugsweise
         35 - 50 Gew.-%,
         (bezogen auf 100 Gew.-Teile PVC oder Vinylchloridmischpolymerisat) und
   2.     einem anderen Polymeren oder Polymergemisch sowie ggf. mit einem zusätzlichen Gehalt an
   3.     Füllstoffen, Verarbeitungshilfsmitteln oder anderen an sich bekannten Zusatzmitteln, dadurch gekennzeichnet, daß die Formmasse aus
   1.2   44,9 - 28 Gew.-%, vorzugsweise
         44,8 - 30 Gew.-%,
         des mit Acrylat gepfropften Polyvinylchlorids und
   2.1   55,1 - 72 Gew.-%, vorzugsweise
         55,2 - 70 Gew.-%,
         eines anderen Polymeren oder Polymergemisches besteht, das
   2.2   eine Glasumwandlungstemperatur von größer als 30°C, vorzugsweise größer als 40°C, besitzt und mit dem Polyvinylchlorid-Pfropfpolymerisat verträglich ist und das
   2.3   ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate ist.

2. Formmassen nach Anspruch 1, dadurch gekennzeichnet, daß das Polymergemisch zusätzlich mindestens
   2.4   ein Copolymerisat oder Terpolymerisat mit polaren Gruppen, vorzugsweise einem Olefinco- oder -terpolymerisat mit polaren Gruppen, mit einer Glasumwandlungstemperatur von kleiner als 60°C, vorzugsweise kleiner als 50°C, enthält.

3. Formmassen nach Ansprüchen 1 und 2, dadurch gekennzeichnet, daß in dem Polymergemisch (aus 2.3 und 2.4)
   2.4.1  das Olefin-Copolymerisat mit polaren Gruppen, aus einem Ethylen-Copolymerisat und/oder -Terpolymerisat mit polaren Gruppen mit einer Glasumwandlungstemperatur von kleiner als 60°C, vorzugsweise kleiner als 50°C, besteht.

4. Formmassen nach einem oder mehreren der Ansprüche 1 - 3, dadurch gekennzeichnet, daß die
         55,1 - 72 Gew.-%, vorzugsweise
         55,2 - 70 Gew.-%,
des Polymergemisches, aus einem oder mehrerer Olefincopolymerisat(en) mit polaren Gruppen (2.4) und einem Styrol-Acrylnitril-Copolymerisat (SAN), einem Methylstyrol-Acrylnitril-Copolymerisat, einem Styrol-Maleinsäureanhydrid-Copolymerisat, einem Polymethylmethacrylat (PMMA) und/oder einem Copolymerisates aus einem oder mehreren Acrylestern mit Acrylnitril (2.3) oder einer Mischung von zwei oder mehreren dieser Copolymerisate bestehen, wobei das Gewichtsverhältnis des polare Gruppen enthaltenden Olefincopolymerisates zu dem anderen Polymerisat oder Copolymerisat(en)
         4 : 1 bis 1 : 4, vorzugsweise
         3 : 1 bis 1 : 3,
beträgt.

5. Formmasse nach einem oder mehreren der Ansprüche 1 - 4, dadurch gekennzeichnet, daß das mit Acrylat gepfropfte Polyvinylchlorid
         bis zu 85 Gew.-%, vorzugsweise
         bis zu 45 Gew.-%
(bezogen auf 100 Gew.-Teile PVC oder acrylatgepfropftes PVC), durch eine Legierung oder Mischung aus Vinylchloridhomo- und/oder copolymerisat und Polyacrylat, die ebenfalls einen Acrylatanteil von

30 - 60 Gew.-%, vorzugsweise
35 - 50 Gew.-%,
(bezogen auf 100 Gew.-Teile PVC oder Vinylchloridmischpolymerisat) aufweist, ersetzt ist.

6. Folie, insbesondere flexible Tiefziehfolie mit verbessertem Alterungsverhalten, bestehend aus einer Legierung oder Mischung auf der Basis von

    1.    mit Acrylat gepfropftem Polyvinylchlorid mit
    1.1    einem Anteil des Acrylats an dem Pfropfpolymerisat oder Pfropfmischpolymerisat von
        30 - 60 Gew.-%, vorzugsweise
        35 - 50 Gew.-%,
        (bezogen auf 100 Gew.-Teile PVC oder Vinylchloridmischpolymerisat) und
    2.    einem anderen Polymeren oder Polymergemisch sowie ggf. mit einem zusätzlichen Gehalt an
    3.    Füllstoffen, Verarbeitungshilfsmitteln oder anderen an sich bekannten Zusatzmitteln, dadurch gekennzeichnet, daß die Folie oder Folienbahn aus
    1.2    44,9 - 28 Gew.-%, vorzugsweise
        44,8 - 30 Gew.-%,
        des mit Acrylat gepfropften Polyvinylchlorids und
    2.1    55,1 - 72 Gew.-%, vorzugsweise
        55,2 - 70 Gew.-%,
        eines anderen Polymeren oder Polymergemisches besteht, das
    2.2    eine Glasumwandlungstemperatur von größer als 30°C, vorzugsweise größer als 40°C, besitzt und mit dem Polyvinylchlorid-Pfropfpolymerisat verträglich ist und das
    2.3    ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate ist.

7. Folie nach Anspruch 6, dadurch gekennzeichnet, daß das Polymergemisch bzw. die Legierung in der Folie oder Folienbahn zusätzlich mindestens
    2.4    ein Copolymerisat oder Terpolymerisat mit polaren Gruppen mit einer Glasumwandlungstemperatur von kleiner als 60°C, vorzugsweise kleiner als 50°C, enthält.

8. Folie nach Ansprüchen 6 und 7, dadurch gekennzeichnet, daß das in der Folie oder Folienbahn enthaltende Polymergemisch,
    2.4.1    als Olefin-Copolymerisat oder -Terpolymerisat mit polaren Gruppen, ein Ethylen-Copolymerisat oder -Terpolymerisat mit polaren Gruppen, mit einer Glasumwandlungstemperatur von kleiner als 60°C, vorzugweise kleiner als 50°C, enthält.

9. Folie nach einem oder mehreren der Ansprüche 6 - 8, dadurch gekennzeichnet, daß in der Folie oder Folienbahn die
    55,1 - 72 Gew.-%, vorzugsweise
    55,2 - 70 Gew.-%,
des Polymergemisches, das eine Glasumwandlungstemperatur von größer als
    30°C, vorzugsweise
    größer als 40°C,
besitzt, aus einem oder mehrerer Olefincopolymerisat(en) mit polaren Gruppen und einem Styrol-Acrylnitril-Copolymerisat (SAN), einem Methylstyrol-Acrylnitril-Copolymerisat, einem Styrol-Maleinsäureanhydrid-Copolymerisat, einem Polymethylmethacrylat (PMMA) und/oder einem Copolymerisat aus einem oder mehreren Acrylestern mit Acrylnitril oder einer Mischung von zwei oder mehreren dieser Copolymerisate besteht, wobei das Gewichtsverhältnis des polare Gruppen enthaltenden Olefincopolymerisates zu dem anderen Polymerisat(en) und/oder Copolymerisat(en)
    4 : 1 bis 1 : 4, vorzugsweise
    3 : 1 bis 1 : 3,
beträgt.

10. Folie nach einem oder mehreren der Ansprüche 6 - 9, dadurch gekennzeichnet, daß das mit Acrylat gepropfte Polyvinylchlorid
    bis zu 85 Gew.-%, vorzugsweise
    bis zu 45 Gew.-%
(bezogen auf 100 Gew.-Teile PVC oder acrylatgepfropftes PVC), durch eine Legierung oder Mischung aus Vinylchloridhomo- und/oder -copolymerisat und Polyacrylat, die ebenfalls einen Acrylatanteil von
    30 - 60 Gew.-%, vorzugsweise
    35 - 50 Gew.-%,
(bezogen auf 100 Gew.-Teile PVC oder Vinylchloridmischpolymerisat) aufweist, ersetzt ist.

## EP 0 204 924 B1

**Claims**

1. Moulding materials for the production of ageing-resistant films with improved workability, consisting of an alloy or plastics mixture based on

    1.   polyvinyl chloride grafted with acrylate with

    1.1  a proportion of the acrylate in the graft polymer or mixed graft polymer of
        30 - 60 % weight, preferably
        35 - 50 % weight,
        (relative to 100 parts by weight PVC or mixed vinyl chloride polymer) and

    2.   another polymer or polymer mixture and also optionally with an additional content of

    3.   fillers, auxiliary processing agents or other known additives, characterised in that the moulding material consists of

    1.2  44.9 - 28 % weight, preferably
        44.8 - 30 % weight,
        of the polyvinyl chloride grafted with acrylate and

    2.1  55.1 - 72 % weight, preferably
        55.2 - 70 % weight,
        of another polymer or polymer mixture, which

    2.2  has a glass transition temperature greater than 30°C, preferably greater than 40°C, and is compatible with the polyvinyl chloride graft polymer, and which

    2.3  is a styrene/acrylonitrile copolymer (SAN), a methylstyrene/acrylonitrile copolymer, a styrene/maleic anhydride copolymer, a polymethylmethacrylate (PMMA) and/or a copolymer of one or more acrylate esters with acrylonitrile or a mixture of two or more of said polymers or copolymers.

2. Moulding materials according to Claim 1, characterised in that the polymer mixture in addition contains at least

    2.4  one copolymer or terpolymer with polar groups, preferably an olefin copolymer or terpolymer with polar groups, with a glass transition temperature of less than 60°C, preferably less than 50°C.

3. Moulding materials according to Claims 1 and 2, characterised in that in the polymer mixture (of 2.3 and 2.4)

    2.4.1  the olefin copolymer with polar groups consists of an ethylene copolymer and/or terpolymer with polar groups with a glass transition temperature of less than 60°C, preferably less than 50°C.

4. Moulding materials according to one or more of Claims 1 - 3, characterised in that the
        55.1 - 72 % weight, preferably
        55.2 - 70 % weight,
    of the polymer mixture consists of one or more olefin copolymer(s) with polar groups (2.4) and a styrene/acrylonitrile copolymer (SAN), a methylstyrene/acrylonitrile copolymer, a styrene/maleic anhydride copolymer, a polymethylmethacrylate (PMMA) and/or a copolymer made of one or more acrylate esters with acrylonitrile (2.3) or a mixture of two or more of said copolymers, the weight ratio of the olefin copolymer containing polar groups to the other polymer or copolymer(s) being
        4 : 1 to 1 : 4, preferably
        3 : 1 to 1 : 3.

5. Moulding material according to one or more of Claims 1 - 4, characterised in that the polyvinyl chloride grafted with acrylate is replaced by
        up to 85 % weight, preferably
        up to 45 % weight
    (relative to 100 parts by weight PVC or acrylate-grafted PVC) by an alloy or mixture of vinyl chloride homopolymer and/or copolymer and polyacrylate, which likewise has an acrylate proportion of
        30 - 60 % weight, preferably
        35 - 50 % weight
    (relative to 100 parts by weight PVC or mixed vinyl chloride polymer).

6. A film, particularly a flexible deep-drawn film with improved ageing properties, consisting of an alloy or mixture based on

    1.   polyvinyl chloride grafted with acrylate with

    1.1  a proportion of the acrylate in the graft polymer or mixed graft polymer of
        30 - 60 % weight, preferably
        35 - 50 % weight,
        (relative to 100 parts by weight PVC or mixed vinyl chloride polymer) and

    2.   another polymer or polymer mixture and also optionally with an additional content of

    3.   fillers, auxiliary processing agents or other known additives, characterised in that the film or film web consists of

    1.2  44.9 - 28 % weight, preferably
        44.8 - 30 % weight,

6

of the polyvinyl chloride grafted with acrylate and

2.1 55.1 - 72 % weight, preferably
55.2 - 70 % weight, of another polymer or polymer mixture, which

2.2 has a glass transition temperature greater than 30°C, preferably greater than 40°C, and is compatible with the polyvinyl chloride graft polymer, and which

2.3 is a styrene/acrylonitrile copolymer (SAN), a methylstyrene/acrylonitrile copolymer, a styrene/maleic anhydride copolymer, a polymethylmethacrylate (PMMA) and/or a copolymer of one or more acrylate esters with acrylonitrile or a mixture of two or more of said polymers or copolymers.

7. Film according to Claim 6, characterised in that the polymer mixture or the alloy in the film or film web contains in addition at least

2.4 one copolymer or terpolymer with polar groups with a glass transition temperature of less than 60°C, preferably less than 50°C.

8. Film according to Claims 6 and 7, characterised in that the polymer mixture contained in the film or film web contains

2.4.1 as the olefin copolymer or terpolymer with polar groups an ethylene copolymer or terpolymer with polar groups, with a glass transition temperature of less than 60°C, preferably less than 50°C.

9. Film according to one or more of Claims 6 - 8, characterised in that in the film or film web the

55.1 - 72 % weight, preferably
55.2 - 70 % weight,

of the polymer mixture, which has a glass transition temperature greater than

30°C, preferably
greater than 40°C,

consists of one or more olefin copolymer(s) with polar groups and a styrene/acrylonitrile copolymer (SAN), a methylstyrene/acrylonitrile copolymer, a styrene/maleic anhydride copolymer, a polymethylmethacrylate (PMMA) and/or a copolymer of one or more acrylate esters with acrylonitrile or a mixture of two or more of said polymers or copolymers, the weight ratio of the olefin copolymer containing polar groups to the other polymer(s) and/or copolymer(s) being

4 : 1 to 1 : 4, preferably
3 : 1 to 1 : 3.

10. Film according to one or more of Claims 6 - 9, characterised in that the polyvinyl chloride grafted with acrylate is replaced by

up to 85 % weight, preferably
up to 45 % weight,

(relative to 100 parts by weight PVC or acrylate-grafted PVC) by an alloy or mixture of vinyl chloride homopolymer and/or copolymer and polyacrylate, which likewise has an acrylate proportion of

30 - 60 % weight, preferably
35 - 50 % weight

(relative to 100 parts by weight PVC or mixed vinyl chloride polymer).

**Revendications**

1. Masses de moulage pour la production de feuilles résistant au vieillissement et présentant des propriétés améliorées d'ouvrabilité constituées d'un alliage ou d'un mélange de matières synthétiques à base de

1. un polychlorure de vinyle greffé par de l'acrylate présentant

1.1. une teneur en acrylate du polymère greffé ou du copolymère greffé de
30 à 60 % en poids, de préférence
35 à 50 % en poids,
(exprimée par rapport à 100 parties en poids de PVC ou de copolymère de chlorure de vinyle) et

2. un autre polymère ou mélange de polymères, de même qu'une teneur complémentaire éventuelle de:

3. charges, adjuvants d'ouvrabilité ou d'autres additifs connus en soi, *caractérisées en ce que*, la masse de moulage est constituée de

1.2. 44,9 à 28 % en poids, de préférence
44,8 à 30 % en poids,
du polychlorure de vinyle greffé par de l'acrylate et

2.1 55,1 à 72 % en poids, de préférence
55,2 à 70 % en poids,
d'un autre polymère ou mélange de polymères, qui

2.2 présente une température de transition vitreuse supérieure à 30°C, de préférence supérieure à 40°C, et qui est compatible avec le polychlorure de vinyle greffé, et qui

2.3.   est un copolymère styrène-acrylonitrile (SAN), un copolymère méthylstyrène-acrylonitrile, un copolymère styrène-anhydride maléique, un polyméthacrylate de méthyle (PMMA) et/ou un copolymère d'un ou plusieurs esters acryliques avec l'acrylonitrile ou un mélange de deux ou de plusieurs de ces polymères ou copolymères.

2. Masses de moulage selon la revendication 1 *caractérisées en ce que*, le mélange de polymères contient de plus au moins

2.4.   un copolymère ou un terpolymère avec des groupes polaires, de préférence un copolymère oléfinique ou un terpolymère oléfinique avec des groupes polaires, présentant une température de transition vitreuse inférieure à 60°C, de préférence inférieure à 50°C.

3. Masses de moulage selon les revendications 1 et 2 *caractérisées en ce que* dans le mélange de polymères (constitué de 2.3 et 2.4)

2.4.1.   le copolymère oléfinique avec des groupes polaires est constitué d'un copolymère éthylénique et/ou d'un terpolymère éthylénique avec des groupes polaires, présentant une température de transition vitreuse inférieure à 60°C, de préférence inférieure à 50°C.

4. Masses de moulage selon une ou plusieurs des revendications 1 à 3 *caractérisées en ce que*, les
   55,1 à 72 % en poids, de préférence
   55,2 à 70 % en poids,
du mélange de polymères sont constitués d'un ou plusieurs copolymères oléfiniques avec des groupes polaires (2.4.) et d'un copolymère styrène-acrylonitrile (SAN), d'un copolymère méthylstyrène-acrylonitrile, d'un copolymère styrène-anhydride maléique, d'un polyméthacrylate de méthyle (PMMA) et/ou d'un copolymère d'un ou plusieurs esters acryliques avec l'acrylonitrile (2.3.) ou d'un mélange de deux ou plus de deux de ces copolymères, le rapport pondéral du polymère oléfinique contenant des groupes polaires aux autres polymères ou copolymères étant de:
   4 : 1 à 1 : 4, de préférence
   3 : 1 à 1 : 3.

5. Masse de moulage selon une ou plusieurs des revendications 1 à 4 caractérisée en ce que le polychlorure de vinyle greffé par de l'acrylate est remplacé à raison de
   jusqu'à 85 % en poids, de préférence
   jusqu'à 45 % en poids
(exprimés par rapport à 100 parties en poids de PVC ou de PVC greffé par de l'acrylate) par un mélange ou un alliage d'homopolymères de chlorure de vinyle et/ou de copolymères de chlorure de vinyle et de polyacrylate, qui présente également une teneur en acrylate de
   30 à 60 % en poids, de préférence
   35 à 50 % en poids,
(exprimée par rapport à 100 parties en poids de PVC ou de copolymère de chlorure de vinyle).

6. Feuille, en particulier feuille flexible pour emboutissage présentant un comportement de vieillissement amélioré, constituée d'un alliage ou d'un mélange à base de
1.   un polychlorure de vinyle greffé par de l'acrylate présentant
1.1.   une teneur en acrylate du polymère greffé ou du copolymère greffé de
   30 à 60 % en poids, de préférence
   35 à 50 % en poids,
(exprimée par rapport à 100 parties en poids de PVC ou de copolymère de chlorure de vinyle) et
2.   un autre polymère ou mélange de polymères, de même qu'une teneur complémentaire éventuelle de:
3.   charges, adjuvants d'ouvrabilité ou d'autres additifs connus en soi, *caractérisées en ce que*, la feuille ou bande de feuille est constituée de
1.2.   44,9 à 28 % en poids, de préférence
   44,8 à 30 % en poids,
du polychlorure de vinyle greffé par de l'acrylate et
2.1   55,1 à 72 % en poids, de préférence
   55,2 à 70 % en poids,
d'un autre polymère ou mélange de polymères, qui
2.2   présente une température de transition vitreuse supérieure à 30°C, de préférence supérieure à 40°C, et qui est compatible avec le polychlorure de vinyle greffé, et qui
2.3.   est un copolymère styrène-acrylonitrile (SAN), un copolymère méthylstyrène-acrylonitrile, un copolymère styrène-anhydride maléique, un polyméthacrylate de méthyle (PMMA) et/ou un copolymère d'un ou plusieurs esters acryliques avec l'acrylonitrile ou un mélange de deux ou de plusieurs de ces polymères ou copolymères.

7. Feuille selon la revendication 6 *caractérisée en ce que* le mélange ou l'alliage de polymères de la feuille ou de la bande de feuille contient de plus au moins

2.4. un copolymère ou un terpolymère avec des groupes polaires, présentant une température de transition vitreuse inférieure à 60°C, de préférence inférieure à 50°C.

8. Feuille selon les revendications 6 et 7 *caractérisée en ce que* le mélange de polymères contenu dans la feuille ou dans la bande de feuille contient,
    2.4.1. à titre de copolymère oléfinique un terpolymère oléfinique avec des groupes polaires, un copolymère éthylénique ou un terpolymère éthylénique avec des groupes polaires, présentant une température de transition vitreuse inférieure à 60°C, de préférence inférieure à 50°C.

9. Feuille selon l'une ou plusieurs des revendications 6 à 8, *caractérisée en ce que* dans la feuille ou dans la bande de feuille les
    55,1 à 72 % en poids, de préférence
    55,2 à 70 % en poids,
du mélange de polymères, qui présente une température de transition vitreuse supérieure à
    30°C, de préférence
    supérieure à 40°C,
sont constitués d'un ou de plusieurs copolymères oléfiniques avec des groupes polaires et d'un copolymère styrène-acrylonitrile (SAN), d'un copolymère méthylstyrène-acrylonitrile, d'un copolymère styrène-anhydride maléique, d'un polyméthacrylate de méthyle (PMMA) et/ou d'un copolymère d'un ou plusieurs esters acryliques avec l'acrylonitrile ou d'un mélange de deux ou plus de deux de ces copolymères, le rapport pondéral du polymère oléfinique contenant des groupes polaires aux autres polymère(s) et/ou copolymère(s) étant de:
    4 : 1 à 1 : 4, de préférence
    3 : 1 à 1 : 3.

10. Feuille selon l'une ou plusieurs des revendications 6 à 9 *caractérisée en ce que* le polychlorure de vinyle greffé par de l'acrylate est remplacé à raison de
    jusqu'à 85 % en poids, de préférence
    jusqu'à 45 % en poids
(par rapport à 100 parties en poids de PVC ou de PVC greffé par de l'acrylate) par un mélange ou un alliage d'homopolymères de chlorure de vinyle et/ou de copolymères de chlorure de vinyle et de polyacrylate, qui présente également une teneur en acrylate de
    30 à 60 % en poids, de préférence
    35 à 50 % en poids,
(exprimée par rapport à 100 parties en poids de PVC ou de copolymère de chlorure de vinyle).